**Europäisches Patentamt**

**European Patent Office**

**Office européen des brevets**

(19)

(11) **EP 0 883 536 B1**

(12) **EUROPÄISCHE PATENTSCHRIFT**

(45) Veröffentlichungstag und Bekanntmachung des Hinweises auf die Patenterteilung:
**17.12.2003 Patentblatt 2003/51**

(21) Anmeldenummer: **97949913.4**

(22) Anmeldetag: **12.11.1997**

(51) Int Cl.⁷: **B60T 8/00**

(86) Internationale Anmeldenummer:
**PCT/DE97/02649**

(87) Internationale Veröffentlichungsnummer:
**WO 98/028172 (02.07.1998 Gazette 1998/26)**

(54) **SYSTEM ZUR VERÄNDERUNG UND/ODER AUSWERTUNG EINES DREHZAHLSIGNALS**

SYSTEM FOR VARYING AND/OR EVALUATING A ROTATIONAL SPEED SIGNAL

SYSTEME POUR MODIFIER ET/OU EVALUER UN SIGNAL DE VITESSE DE ROTATION

(84) Benannte Vertragsstaaten:
**DE FR GB IT SE**

(30) Priorität: **20.12.1996 DE 19653262**

(43) Veröffentlichungstag der Anmeldung:
**16.12.1998 Patentblatt 1998/51**

(73) Patentinhaber: **ROBERT BOSCH GMBH**
**70442 Stuttgart (DE)**

(72) Erfinder:
• **GERSTENMEIER, Juergen**
**D-71717 Beilstein (DE)**
• **MOERBE, Matthias**
**D-74360 Ilsfeld-Helfenberg (DE)**

(56) Entgegenhaltungen:
**EP-A- 0 727 666**   **DE-A- 3 407 716**
**DE-A- 4 431 045**   **GB-A- 2 070 776**
**GB-A- 2 202 016**

**Beschreibung**

Stand der Technik

Die Erfindung geht aus von einem System zur Veränderung beziehungsweise Auswertung eines die Drehzahl wenigstens eines Fahrzeugrades repräsentierenden Signals bei einem Kraftfahrzeug mit den Merkmalen der Oberbegriffe der unabhängigen Ansprüche. Zur Regelung bzw. Steuerung der Bremskraft, Antriebskraft und/oder der Fahrdynamik eines Kraftfahrzeugs ist es bekannt, die Drehzahlen der Fahrzeugräder zu messen. Hierzu werden im Stand der Technik vielerlei Methoden (bspw. Hall- oder magnetoresistive Sensoren) ausgeführt. Darüber hinaus ist es bekannt, die Abnutzung des Bremsbelages einer Fahrzeugbremse zu ermitteln, indem beispielsweise in einer gewissen Tiefe der Bremsbeläge Kontaktstifte eingelassen sind, die bei einer Bremsbetätigung einen Kontakt auslösen, wenn der Bremsbelag bis zu dieser Tiefe abgenutzt ist.

So zeigt beispielsweise der Artikel "Integrierte Hall-Effekt-Sensoren zur Positions- und Drehzahlerkennung", elektronik industrie 7-1995, Seiten 29 bis 31 aktive Sensoren zum Einsatz im Kraftfahrzeug für Antiblockier- Antriebsschlupf-, Motor- und Getriebesteuerungs- bzw. -regelungssysteme. Solche Sensoren liefern in einer Zweidrahtbeschaltung zwei Strompegel, die in einem entsprechenden Steuergerät durch einen Meßwiderstand in zwei Spannungspegel umgesetzt werden.

Neben den erwähnten Hall-Effekt-Sensoren ist auch der Einsatz von magnetoresistiven Sensoren zur Drehzahlerfassung beispielsweise aus dem Artikel "Neue, alternative Lösungen für Drehzahlsensoren im Kraftfahrzeug auf magnetoresisitiver Basis", VDI-Berichte Nr.509, 1984 bekannt.

In der DE,C2,26 06 012 (US 4,076,330) wird eine spezielle gemeinsame Anordnung zur Erfassung des Verschleißes eines Bremsbelages und zur Erfassung der Raddrehzahl beschrieben. Hierzu wird der erfaßte Bremsbelagverschleiß und die durch einen induktiv arbeitenden Sensor erfaßte Raddrehzahl über eine gemeinsame Signalleitung zu einer Auswerteeinheit geführt. Dies wird dadurch erreicht, daß der Raddrehzahlsensor in Reaktion auf einen erfaßten Bremsbelagverschleiß ganz oder teilweise kurzgeschlossen wird.

Andere Systeme wie sie beispielsweise in der DE,C,43,22,440 beschrieben werden, benötigen zur Erfassung der Drehzahl und des Bremsbelagverschleißes an einem Rad bzw. einer Radbremse mindestens zwei Signalleitungen zwischen einer Radeinheit und der Auswerteeinheit.

Bei der obengenannten Drehzahlerfassung ist es bekannt, daß der Luftspalt zwischen dem sich drehenden Zahnkranz und dem eigentlichen Sensorelement einen erheblichen Einfluß auf die Qualität beziehungsweise Güte des Drehzahlsignals hat. Hierzu sei beispielsweise auf die DE-OS 32 01 811 verwiesen.

Die obengenannten Informationen (beispielsweise Bremsbelagverschleiß und Luftspalt/Signalgüte) werden im allgemeinen radnah erfaßt und in einer radfern angeordneten Steuereinheit ausgewertet. Hierzu müssen die Informationen zur Steuereinheit übertragen werden.

Aus der nicht vorveröffentlichten deutschen Patentanmeldung 196 18867.9 ist bekannt, zur Übertragung von Zusatzinformationen (übermäßiger Bremsbelagverschleiß, zu großer Luftspalt/mangelhafte Signalgüte) ein Drehzahlsignal in verschieden vorgebbarer Weise zu ändern. Die Weise der Veränderung wird dabei abhängig von der zu übertragenden Zusatzinformation unterschiedlich getätigt. Zur Realisierung der unterschiedlichen Änderungen des Drehzahlsignals setzt dies einen gewissen Aufwand voraus.

Die EP 0 727 666 A1 zeigt eine Einrichtung zum Überwachen von Zustandsgrößen eines Kraftfahrzeugs. Hierzu wird einem Drehzahlsignal die Information über die Stellung eines Binärschalters (Bremsbelagverscheiß) dadurch überlagert, dass die Spannungslevel des Drehzahlsignals in einer bestimmten Weise geändert werden.

Aufgabe der vorliegenden Erfindung ist es, eine sehr einfache und sichere Übertragung des Drehzahlsignals und weiterer Informationen zu realisieren.

Diese Aufgabe wird durch die kennzeichnenden Merkmale der unabhängigen Ansprüche gelöst.

Vorteile der Erfindung

Die Erfindung betrifft die Übertragung von mehreren Zusatzinformationen durch eine einzige Modifikation eines Drehzahlsignals. Neben der erfindungsgemäßen Veränderung des Drehzahlsignals im radnahen Bereich (modifizierter Drehzahlsensor) zeigt die Erfindung die spezielle Auswertung des erfindungsgemäß veränderten Drehzahlsignals im radfernen Bereich (Steuergerät). Daneben besteht die Erfindung selbstverständlich auch in der Kombination aus dem speziellen Drehzahlsensor und dem Steuergerät.

Bei der Veränderung eines eine Drehbewegung eines Fahrzeugrades repräsentierenden Signals geht die Erfindung aus von ersten Mitteln zur Erzeugung eines die Drehbewegung repräsentierenden ersten Signals und von zweiten Mitteln zur Erzeugung wenigstens zweier weiterer Signale, wobei jeweils eines der weiteren Signale als Zusatzinformation verschiedene Betriebszustände wenigstens zweier unterschiedlicher Vorrichtungen repräsentiert. Solche Vorrichtungen können beispielsweise die ersten Mittel (Drehzahlsensor) selbst oder den Bremsbelag einer an dem Fahrzeugrad vorhandenen Radbremse sein. Weiterhin sind dritte Mittel vorgesehen, mittels der das erste Signal abhängig von den weiteren Signalen in vorgebbarer Weise verändert werden kann.

Der Kern dieser Erfindungsvariante besteht darin, daß die dritten Mittel derart ausgestaltet sind, daß die Veränderung in einer einzigen Weise vorgegeben wird und diese Veränderung in Abhängigkeit von wenigstens einem der weiteren Signale stattfindet.

Die erfindungsgemäße Veränderung des Drehzahlsignals hat den Vorteil, daß in einfacher und sicherer Weise über die Ausgangsleitung des Drehzahlfühlers die Zusatzinformationen, (beispielsweise über den eingangs erwähnten Luftspalt/Signalgüte und/oder den Bremsbelagverschleiß) übertragen werden können. Hierdurch entfällt beispielsweise die eingangs erwähnte zweite Signalleitung zur ausschließlichen Übertragung der Zusatzinformationen. insbesondere weist die vorliegende Erfindung gegenüber der nicht vorveröffentlichten deutschen Patentanmeldung 196 18867.9 den Vorteil auf, daß nur durch eine einzig mögliche Veränderung des Drehzahlsignals wenigstens zwei unterschiedliche Zusatzinformationen (z.B. übermäßiger Bremsbelagverschleiß, mangelhafte Signalgüte/übermäßig großer Luftspalt) übertragen werden können. Beim Gegenstand der 196 18867.9 wird entweder nur eine einzige Zusatzinformation dem Drehzahlsignal überlagert oder es werden, im Falle von mehreren Zusatzinformationen, diese Zusatzinformationen dem Drehzahlsignal codiert überlagert, was einen gewissen schaltungs- und/oder programmtechnischen Aufwand bedeutet. Gemäß der Erfindung werden mindestens zwei Zusatzinformationen gleichzeitig durch eine einzige Modifikation des Drehzahlsignals übertragen. Setzt man voraus, daß nur eine einzige Drehzahlmodifikation möglich ist, so führen erfindungsgemäß statt einer alternativen Entscheidung für eines der mehreren Zusatzinformationen alle Zusatzinformationen zu der möglichen Modifikation des Drehzahlsignals und werden damit zur Ausgabe gebracht. Der Drehzahlfühler und die Erfassung der obengenannten Zusatzinformationen bildet dabei eine kompakte Einheit.

Bei der Auswertung eines eine Drehbewegung eines Fahrzeugrades repräsentierenden Signals geht die Erfindung davon aus, daß das Fahrzeugrad eine Radbremse aufweist und das Signal zur Übertragung von Zusatzinformationen wie beispielsweise Verschleiß des Bremsbelages der Radbremse oder die Güte des Signals in einer vorgebbaren Weise verändert wird.

Der Kern dieser Erfindungsvariante besteht darin, daß Erzeugungsmittel zur Erzeugung wenigstens eines eine Betätigung der Radbremse repräsentierenden Signals vorgesehen sind. Weiterhin weist die Erfindung Auswertemittel auf, mittels der das Signal oder das veränderte Signal mit wenigstens dem erzeugten, eine Bremsbetätigung repräsentierenden Signal verknüpft wird. Abhängig von dieser Verknüpfung werden dann wenigstens zwei die Zusatzinformationen repräsentierenden Signale gebildet.

Die erfindungsgemäße Auswertung des Drehzahlsignals beziehungsweise des veränderten Drehzahlsignals hat den Vorteil, daß in einfacher und sicherer Weise über die Ausgangsleitung des Drehzahlfühlers die Zusatzinformationen, beispielsweise über den eingangs erwähnten Luftspalt/Signalgüte und/oder den Bremsbelagverschleiß) übertragen werden können. Die erfindungsgemäße Auswertung des Drehzahlsignals greift auf Signale zurück, die im allgemeinen sowieso im Steuergerät vorhanden sind. Als Informationen bezüglich einer Bremsbetätigung kann dabei auf das Signal eines Bremslichtschalters und/oder auf ein Signal, das den Bremsdruck repräsentiert, zurückgegriffen werden.

Schließlich betrifft die Erfindung das Gesamtsystem, das von einem System zur Veränderung und Auswertung eines eine Drehbewegung repräsentierenden Signals ausgeht, bei dem erste Mittel zur Erzeugung eines die Drehbewegung repräsentierenden ersten Signals und zweite Mittel zur Erzeugung wenigstens zweier weiterer Signale ausgeht. Dabei repräsentiert jeweils eines der weiteren Signale als Zusatzinformationen verschiedene Betriebszustände wenigstens zweier unterschiedlicher Vorrichtungen. Solche Vorrichtungen können der Drehzahlsensor selbst oder der Bremsbelag sein. Weiterhin sind dritte Mittel vorhanden, mittels der das erste Signal abhängig von den weiteren Signalen in vorgebbarer Weise verändert werden kann. Mittels vierter Mittel wird das erste oder das veränderte erste Signal ausgewertet, wobei abhängig von dieser Auswertung wenigstens ein Signals erzeugt wird, das die verschiedenen Betriebszustände der wenigstens zwei unterschiedlichen Vorrichtungen repräsentiert.

Der Kern dieser Erfindungsvariante besteht nun darin, daß fünfte Mittel zur Erzeugung wenigstens eines eine Bremsbetätigung repräsentierenden Signals vorgesehen sind und die dritten Mittel derart ausgestaltet sind, daß die Veränderung in einer einzigen Weise vorgegeben wird. Diese Veränderung findet in Abhängigkeit von wenigstens einem der weiteren Signale statt. Die vierten Mittel sind derart ausgestaltet, daß das erste oder das veränderte erste Signal mit wenigstens dem erzeugten, eine Bremsbetätigung repräsentierenden Signal verknüpft wird. Abhängig von dieser Verknüpfung werden dann wenigstens zwei die Zusatzinformationen repräsentierende Signale gebildet.

Das Gesamtsystem verbindet selbstverständlich die obengenannten Vorteile der Einzelsysteme.

Ein weiterer Vorteil des erfindungsgemäßen Gedankens besteht darin, daß am Ende der Fahrzeugproduktion (Bandende) eine relativ einfache Überprüfung des korrekten Einbaus der Drehzahlsensoren stattfinden kann. Da zu diesem Zeitpunkt, am Bandende, der Bremsbelag neu ist, kann eine erfindungsgemäße Änderung des Drehzahlsignals nur von einem fehlerhaft montierten Drehzahlfühlereinbau kommen.

In einer vorteilhaften Ausgestaltung der Erfindung ist vorgesehen, daß die ersten Mittel derart ausgestaltet sind, daß das erste Signal wenigstens zwei erste Stromwerte und/oder wenigstens zwei erste Spannungswerte annimmt. Die, dritten Mittel sind dann derart ausgestaltet, daß zur Veränderung des ersten Signals in einer einzigen vorgebbaren Weise wenigstens einer der ersten Stromwerte und/oder wenigstens einer der ersten Spannungswerte wenigstens eine bestimmte Zeit abhängig von dem zweiten Signal zu einem zweiten Stromwert und/oder einem zweiten Spannungswert verändert werden kann. Diese Variante geht insbesondere davon aus, daß die ersten Mittel als ein an sich bekannter aktiver Drehzahlfühler ausgebildet sind.

Die Erzeugungsmittel oder die fünften Mittel können weiterhin zur Erzeugung wenigstens eines die Fahrzeuggeschwindigkeit repräsentierenden Signals ausgebildet werden.

Weiterhin kann vorteilhafterweise vorgesehen sein, daß die Verknüpfung in den Auswertemittel oder den vierten Mitteln derart ausgestaltet ist, daß aus der zeitlichen Korrelation des die Betätigung der Radbremse repräsentierenden Signals mit der vorgebbaren Änderung des die Drehbewegung eines Fahrzeugrades repräsentierenden Signals die die Zusatzinformationen repräsentierenden Signale gebildet werden.

Die zweiten Mittel sind vorteilhafterweise zur Erzeugung eines den Bremsbelagverschleiß an wenigstens einer Fahrzeugradbremse repräsentierenden Signals und/oder zur Erzeugung eines die Amplitude eines mit dem ersten Signal (Drehzahlsignal) zusammenhängenden Signals repräsentierenden Signals ausgelegt.

Insbesondere ist vorgesehen, daß die ersten, zweiten und dritten Mittel radnah und/oder die vierten, fünften Mittel oder die Auswertemittel radfern angeordnet sind.

Weitere vorteilhafte Ausgestaltungen sind den Unteransprüchen zu entnehmen.

Zeichnung

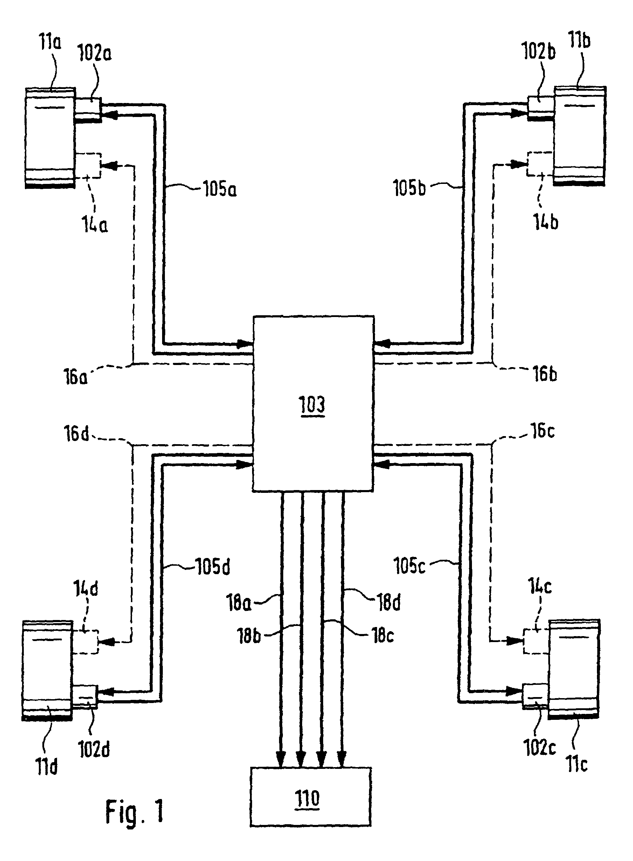

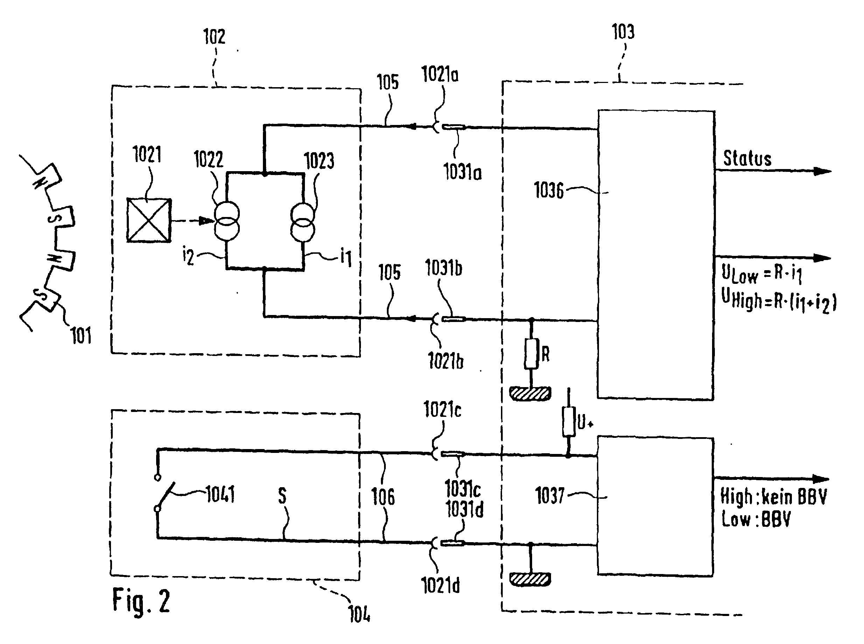

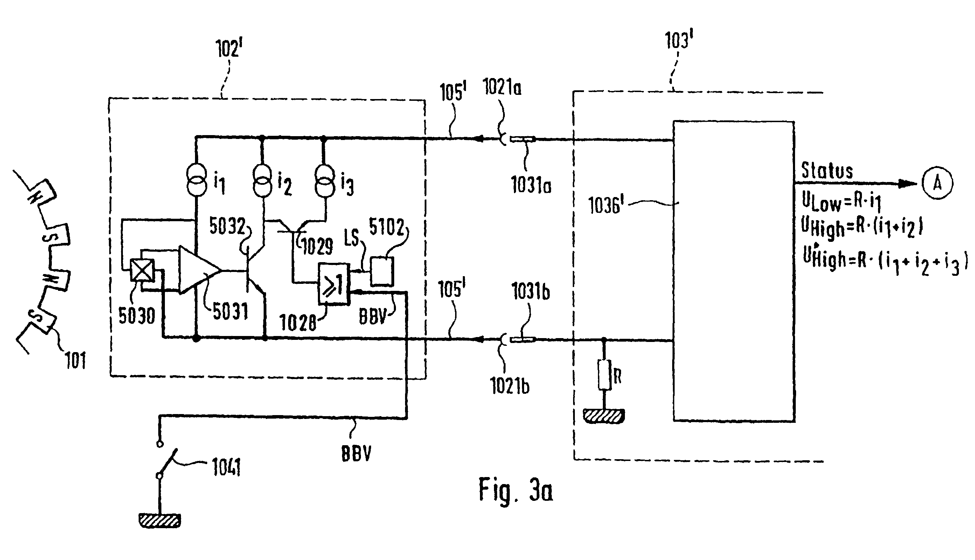

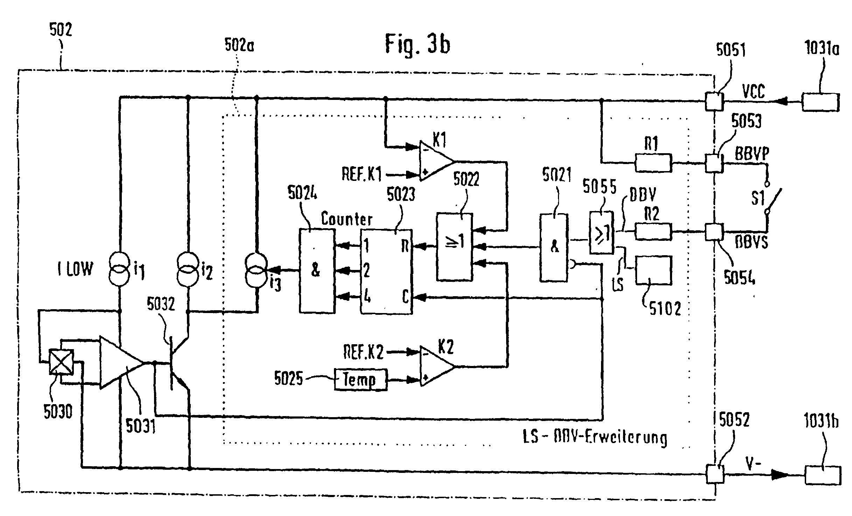

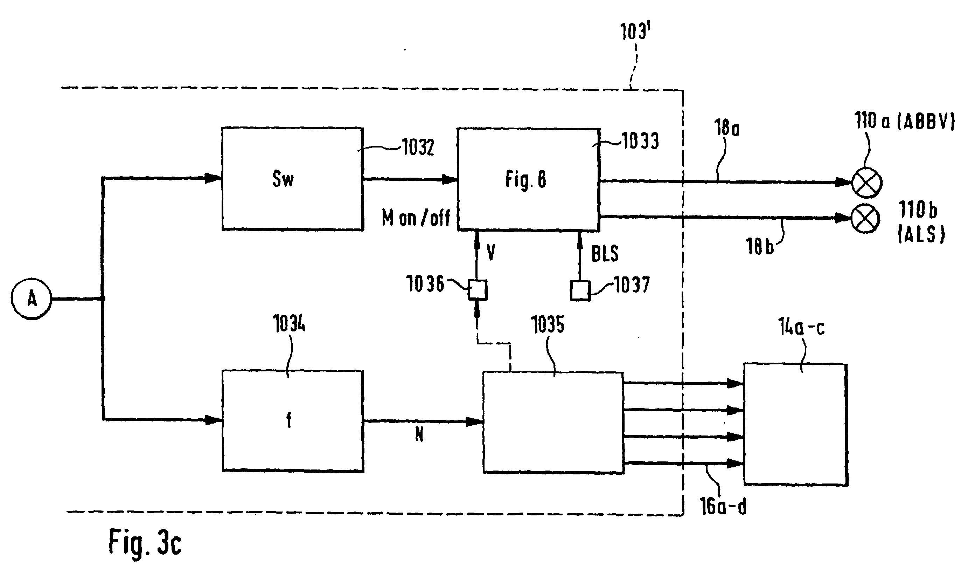

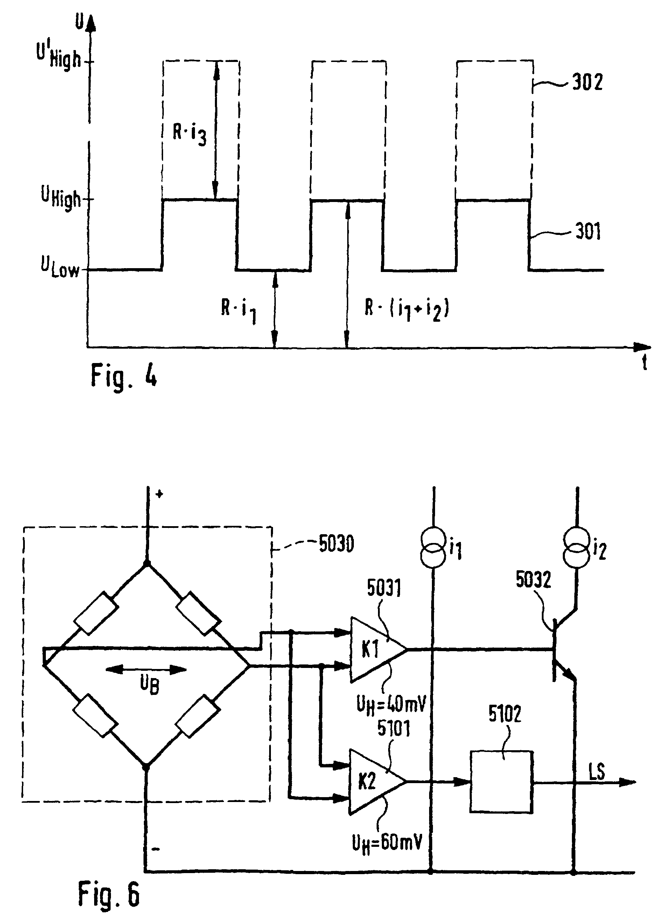

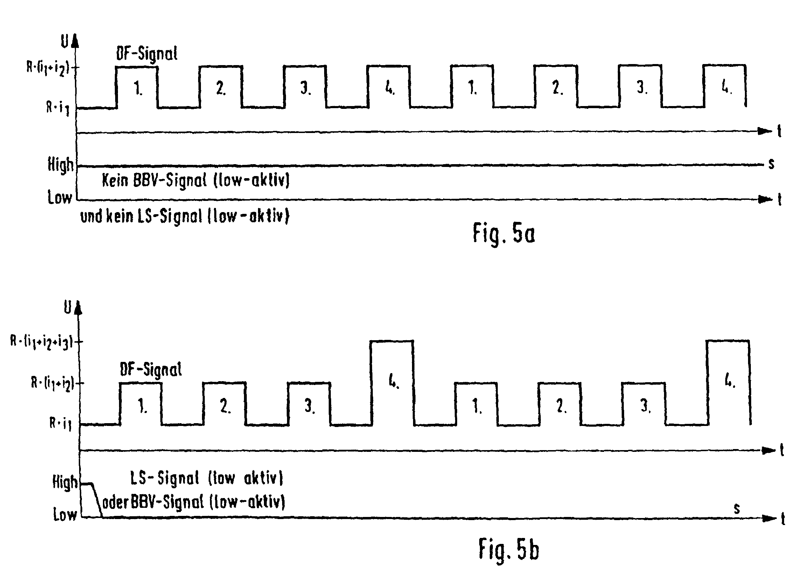

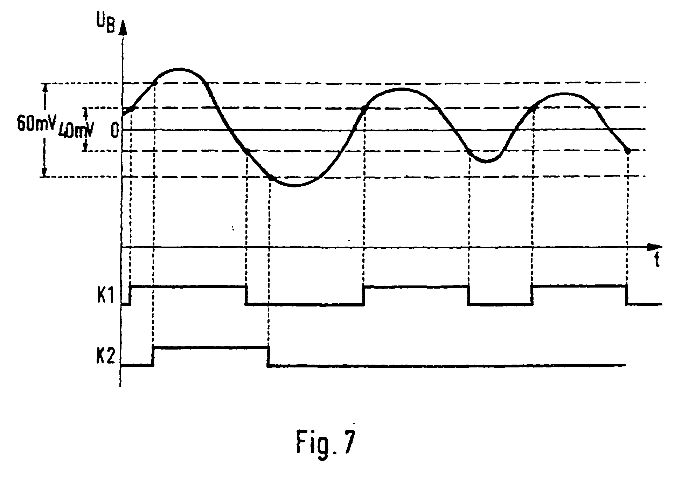

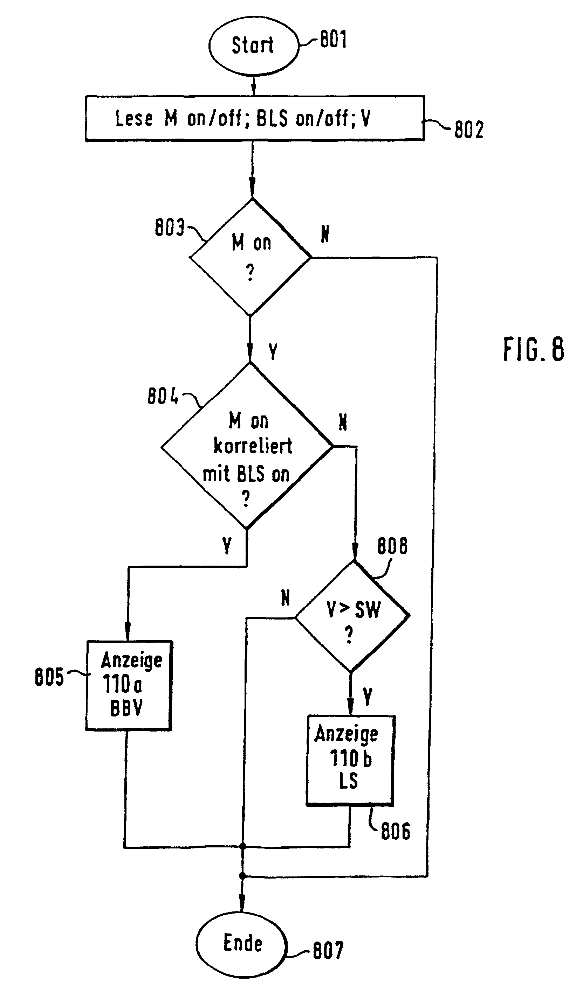

Die Figur 1 zeigt schematisch ein Blockschaltbild wie es aus dem Stand der Technik bekannt ist. Die Figur 2 zeigt eine einfache Kombination eines aktiven Drehzahlfühlers mit einer Bremsbelagverschleißerfassung. Die Figur 3 stellt mit den Teilen a und b anhand von Schaltungsanordnungen zwei Ausführungsvarianten der erfindungsgemäßen Veränderung des Drehzahlsignals dar, mit den in den Figuren 4 und 5a/b zu sehenden zugehörigen Signalverläufen. Die Figur 3c offenbart die Auswertung anhand eines Blockschaltbildes, wobei die Figur 8 die Funktion eines in der Figur 3c gekennzeichneten Blocks darstellt. Die Figur 6 zeigt mit den zugehörigen Signalverläufen in der Figur 7 beispielhaft die Erfassung eines übermäßigen Luftspalts.

Ausführungsbeispiel

Anhand der im folgenden beschriebenen Ausführungsformen soll die Erfindung detailliert beschrieben werden.

Die Figur 1 zeigt als Übersichtsblockschaltbild ein System zur Ermittlung des Bremsbelagverschleißes und von Raddrehzahlen bei einem Kraftfahrzeug.

Mit dem Bezugszeichen 11a-d sind dabei die Radeinheiten eines Kraftfahrzeugs bezeichnet. Zu diesen Radeinheiten gehören insbesondere die Räder, deren Umdrehungsgeschwindigkeiten (die Raddrehzahlen) gemessen werden sollen, und das zu jeder Radeinheit zugeordnete Bremssystem (Reibungsbremse). Mit dem Bezugszeichen 102a-d sind die jedem Rad zugeordneten Drehzahlfühler und Bremsbelagverschleißfühler bezeichnet, die, soweit es die Erfindung betrifft, anhand der Figur 2 bzw. 3 näher beschrieben werden. Zu dem über die Erfindung hinausgehenden Aufbau dieser Fühler soll ausdrücklich auf den eingangs erwähnten Stand der Technik verwiesen werden.

Die Ausgangssignale der Drehzahlfühler und Bremsbelagverschleißfühler 102a-d sind mit dem Steuergerät 103 verbunden, wobei mit 105a-d die Übertragungsleitungen dargestellt werden. Im Steuergerät 103 werden dann die mittels der Übertragungsleitungen 105a-d übertragenen Informationen zentral für alle Radeinheiten ausgewertet. Der Zustand der Bremsbeläge wird als Auswertungsergebnis vom Steuergerät 103 über die Leitungen 18a-d dem Anzeigeinstrument 110 zugeführt. Hierzu ist im allgemeinen vorgesehen, daß der Fahrer bei einem gewissen Abnutzungsgrad einer oder mehrere Bremsbeläge eine entsprechende Information zugewiesen bekommt.

Der Vollständigkeit halber sind mit den Bezugszeichen 14a-d noch die Bremssysteme der einzelnen Radeinheiten 11a-d skizziert, die vom Steuergerät 105 aus angesteuert werden können.

Die Figuren 2 zeigt den Stand der Technik, während die Figuren 3a und 3b verschiedene Ausführungsformen exemplarisch an einer einzigen Radeinheit darstellen.

Die Figur 2 zeigt dabei eine einfache Kombination eines aktiven Drehzahlfühlers mit einer Bremsbelagverschleißerfassung. Wie schon eingangs erwähnt kann als "aktiver" Drehzahlfühler 102 ein bekannter Hall-Drehzahlfühler oder ein bekannter magneto-resistiver Drehzahlfühler vorgesehen sein. In der Figur 2 ist hierzu schematisch zu sehen, daß ein Sensorelement 1021 einen inkrementalen Rotors 101 magnetischer passiver Art abtastet. Abhängig von den abgetasteten Inkrementen des Rotors 101 werden durch das Sensorelement 1021 zwei Strompegel $i_1$ und $i_2$ eingestellt. Dies ist in den Figur 2 mit dem Zu- bzw. Abschalten zweier Stromquellen 1022 und 1023 dargestellt.

Der Drehzahlfühler 102 ist mit dem Steuergerät 103 über die Leitungen 105 bzw. über die Steckverbindungen 1021a und b und 1031a und b verbunden. Der Eingangsverstärker 1036 detektiert mit Hilfe des Eingangswiderstandes R die den Strompegeln des Drehzahlfühlers 102 entsprechenden Spannungswerte

$$U_{Low} = R*i_1$$

$$U_{High} = R*(i_1 + i_2)$$

Ein typischer Verlauf bei im wesentlichen konstanter Raddrehzahl ist im unteren Signalzug 301 der Figur 4 zu sehen. Durch eine Auswertung der Frequenz dieses Signals gelangt man zur gewünschten Raddrehzahl.

Im unteren Teil der Figur 2 ist schematisch eine bekannte Erfassung 104 des Bremsbelagverschleißes an einer Radbremse zu sehen. Wie schon eingangs erwähnt ermittelt der aus dem Stand der Technik an sich bekannte Bremsbelagverschleißfühler die Abnutzung des Bremsbelages einer Fahrzeugbremse, indem beispielsweise in einer gewissen Tiefe der Bremsbeläge Kontaktstifte eingelassen sind, die bei einer Betätigung der Bremse (der Bremsbelag wird an die Bremsscheibe angedrückt) einen Kontakt auslösen, wenn der Bremsbelag bis zu dieser Tiefe abgenutzt ist. Dieser Kontakt ist in der Figur 2 mit dem Schalter 1041 bezeichnet. Der Schalter 1041 ist im Normalfall (keine anzeigerelevanter Bremsbelagverschleiß) offen, wobei die Spannung U+ nicht geerdet wird. Erreicht der Bremsbelag einen gewissen Abnutzungsgrad, so wird der Schalter 1041 geschlossen, was wegen der Erdung durch die Verbindung 106 bzw. die Steckverbindung 1012 und 1031 in der Auswerteschaltung 1037 detektiert wird.

Wie man bei der in der Figur 2 gezeigten Ausführungsform erkennt, sind zur Übertragung der Raddrehzahlinformationen und der Informationen über den Zustand des Bremsbelages jeweils getrennte Signalleitungen 105 und 106 notwendig.

Anhand der Figuren 3a und b soll nun das erfindungsgemäße System erläutert werden. Hierbei wurde der in der Figur 2 beschriebene Drehzahlfühler 102 um die zusätzliche Stromquelle $i_3$ ergänzt, die parallel zu dem in der Figur 2 gezeigten Drehzahlfühler angeordnet ist.

In der Figur 3a kann die zusätzliche Stromquelle $i_3$ durch den Transistor 1029 in den Stromkreis zwischen Drehzahlfühler und Auswerteeinheit dann zugeschaltet werden, wenn der Transistor 5032 auf Durchlaß geschaltet ist.

Der Transistor 1029 wird durch das logische ODER-Gatter 1028 angesteuert. An dem ODER-Gatter 1028 liegt das Signal S beziehungsweise BBV, das von dem schon anhand der Figur 2 beschriebenen Schalter 1041 ausgeht, und das Signal LS, das von dem Block 5102 ausgeht, an. Wie schon erwähnt ändert der Schalter 1041 dann seinen Schaltzustand, wenn bei einer Betätigung der Bremse ein bestimmter Verschleiß des Bremsbelages erkannt wird. Die Erzeugung des Signals LS sowie die Funktion des Sensorelements 5030 und Komparators 5031 soll im folgenden anhand der Figuren 6 und 7 beschrieben werden.

Die Figur 6 zeigt beispielhaft das Sensorelement 5030 und die Erfassung eines übermäßigen Abstands eines Hallbeziehungsweise magnetoresistiven Sensors gegenüber dem schon beschriebenen Zahnkranz des Fahrzeugrades, dessen Drehgeschwindigkeit erfaßt werden soll. Bei dem Sensorelement 5030 handelt es sich um das mit demselben Bezugszeichen bezeichnete Sensorelement in den Figuren 3a und 3b. Es handelt sich bei dem Sensorelement 5030 um eine bekannte Wheatstone-Brücke mit einer typischen ringförmigen Anordnung von Widerständen. Durch das Vorbeigleiten der einzelnen Segmente des nicht dargestellten Zahnkranzes (101/Fig.3a) wird in dieser Wheatstone-Brücke die Brückenspannung $U_B$ erzeugt, die den Komparatoren 5031 und 5101 zugeführt werden. Der Komparator K1 entspricht dem in den Figuren 3a und 3b mit demselben Bezugszeichen gekennzeichneten Komparator und dient zur Auswertung der Raddrehzahl. In dem Komparator K2 5101 findet eine weitere Auswertung der Brückenspannung derart statt, daß diese Brückenspannung mit einem relativ hohen Schwellwert $U_H$ verglichen wird. Zum Hintergrund der beiden Schwellwertvergleiche soll im folgenden auf die Figur 7 eingegangen werden.

Die Figur 7 zeigt einen typischen Signalverlauf der Brückenspannung über der Zeit. Je nach der Geschwindigkeit des Vorbeigleitens der einzelnen Segmente des Zahnkranzes (101/Fig.3a) nimmt die Brückenspannung periodisch zu beziehungsweise periodisch ab. Bleibt der Abstand, der Luftspalt, zwischen dem Zahnkranz und der Wheatstone-Brücke 5030 konstant, so weist die Brückenspannung eine konstante Amplitude auf. Wird dieser Abstand jedoch zu groß, so nimmt die Amplitude der Brückenspannung ab. Dieser Fall ist in der Figur 7 dargestellt.

Ein erster Schwellwertvergleich im Komparator 5031 vergleicht das Brückenspannungssignal mit einem relativ geringen Schwellwert, beispielsweise 40 mV. Ausgangsseitig liefert der Komparator 5031 dann das im unteren Signalverlauf K1 der Figur 7 gezeigte Ansteuersignal für die Stromquellen $i_1$ und $i_2$ (siehe Figur 5). Das Signal K1 repräsentiert also, auch bei einem sich vergrößernden Luftspalt, die Raddrehzahl. Der Komparator 5101 überprüft die Amplitude des Brückenspannungssignals dadurch, daß in diesem Komparator eine relativ hohe Schwelle von beispielsweise 60 mV eingestellt ist. Ist der Abstand zwischen dem Zahnkranz und der Wheatstone-Brücke, der Luftspalt, hinreichend gering, so liegt die Amplitude des Brückenspannungssignals oberhalb der Schwelle des Komparators 5101. Das Ausgangssignal des Komparators 5101 zeigt, wie im unteren Signalverlauf K2 in der Figur 7 zu sehen ist, im ordnungsgemäßen Fall mit einem zeitlichen Verzug des Signals K1 gegenüber dem Signal K1. Bleibt jedoch das Komparatorsignal K2 aus, so nimmt die Amplitude des Brückenspannungssignals ab, was auf einen übermäßigen Luftspalt schließen läßt.

Das Ausbleiben des Signals K2 wird in der Einheit 5102 detektiert, wobei ein Ausbleiben des Signals K2 eine Erzeugung des Signals LS zur Folge hat. Die Einheit 5102 ist in den Figuren 3a und 3b mit demselben Bezugszeichen gekennzeichnet.

Zusammenfassend ist zu der Luftspalterkennung zu sagen, daß mit Hilfe eines aktiven Sensors, beispielsweise eines Hall-Sensors oder eines magnetoresistiven Sensors, die Drehzahlsignale eines Rades erfaßt werden. Die Sensoren beinhalten eine Wheatstone-Brücke, die durch ein sich änderndes Magnetfeld verstimmt wird. Aus dieser Verstimmung wird das Signal für die Drehzahl gewonnen. Der Betrag der Verstimmung steht in einem festen Verhältnis zur Größe der Magnetfelddifferenz zwischen den beiden Brückenhälften. Die Magnetfelddifferenz ist unter anderem abhängig vom Abstand des Sensors zu dem Polrad. Bewertet man den Betrag der Brückenverstimmung, so kann man auf den Luftspalt zwischen dem Sensor und dem Polrad und damit auf die Signalgüte des Drehzahlsignals schließen. Diese Bewertung kann mit einem Komparator 5101 erfolgen, der eine größere Hysterese ($U_H$ = 60 mV) hat wie der normale Nutzsignalkomparator 5031 ($U_H$ = 40 mV). Ist der Luftspalt klein, so schalten beide Komparatoren, ist jedoch der Luftspalt zu groß, so schaltet nur noch der Nutzsignalkomparator 5031. Auf diese Weise hat man ein Frühwarnsystem für einen zu großen Luftspalt, ohne gleich die Raddrehzahlinformation zu verlieren. Diese Information kann beispielsweise als Bandendkontrolle bei der Kraftfahrzeugherstellung, in der Werkstatt oder während der Fahrt genutzt werden.

Wie anhand der Figur 3a zu erkennen ist, wird abhängig von dem in den Figuren 6 und 7 beschriebenen Komparator 5031 der Transistor 5032 angesteuert. Ist der Transistor 1029 gesperrt, so liegen am Ausgang 105' der Sensoreinheit 102' periodisch die Strompegel $i_1$ (Low-Level) und $[i_1+i_2]$ (High-Level) an, deren Frequenz die Drehzahl des Rades angibt.

Die Stromquelle $i_3$ wird durch eine Ansteuerung des Transistors 1029 dann dem Strompegel $[i_1+i_2]$ überlagert, wenn entweder das Signal LS (Einheit 5102/Fig.6) einen anzeigerelevanten Luftspalt "oder" das Signal BBV einen anzeigerelevanten Bremsbelagverschleiß repräsentiert. Die logische "oder"-Verknüpfung geschieht dabei im logischen ODER-Gatter 1028. Ist der Transistor 1029 auf Durchlaß geschaltet, so erhöht sich der High-Level des Drehzahlsignals am Ausgang 105' auf den Pegel $[i_1+i_2+i_3]$ (High-Level'). Der Ausgang 105' ist mit dem Eingang 1031b des Steuergeräts beziehungsweise der Auswerteeinheit 103' verbunden.

Je nach dem Schaltzustand des Transistors 1029 und abhängig von dem Signal BBV "oder" dem Signal LS detektiert der Eingangsverstärker 1036' mit Hilfe des Eingangswiderstandes R die den obengenannten Strompegeln entsprechenden Spannungswerte

$$U_{Low} = R*i_1$$

$$U_{High} = R*(i_1+i_2)$$

oder

$$U_{High}' = R*(i_1+i_2+i_3)],$$

je nach dem, ob ein anzeigerelevanter Bremsverschleiß oder ein anzeigerelevanter Luftspalt erkannt wurde ($U_{High}'$) oder nicht ($U_{High}$).

Neben dem schon beschriebenen typischen Verlauf 301 bei abgeschalteter zusätzlicher Stromquelle 1014 ist im oberen Signalzug 302 der Figur 4 der Signalverlauf bei eingeschalteter Stromquelle $i_3$ zu sehen. Der obere Signalpegel (High'-Level) ist also gegenüber dem unteren 301 (High-Level) um den Offset ($R*i_3$) verschoben.

Durch eine Auswertung der Frequenz dieser im Signalzug 301 oder 302 gezeigten Signale im Block 1034 der Figur 3c gelangt man zur gewünschten Raddrehzahl N. Diese Drehzahl N kann dann der eigentlichen Brems-, Antriebs- oder sonstigen Regelung/Steuerung 1035 zugeführt werden. Im Falle einer Brems- oder Antriebs-Regelung/Steuerung werden abhängig von den detektierten Drehzahlen die Radbremsen 11a-d angesteuert (Signale 14a-d). Die Frequenzauswertung 1034 ist dabei derart ausgelegt, daß die Frequenz der Signalzüge 301 und 302 unabhängig von dem obengenannten, durch die Schaltstellung des Schalters 1041 bewirkten Offset ermittelt wird. Auf diese Art ist die Drehzahlerfassung in jedem Fall, also unabhängig von einem erkannten zu großen Bremsbelagverschleiß oder einem erkannten zu großen Luftspalt sichergestellt. Dies ist für die Systemverfügbarkeit wichtig.

Neben der obengenannten Auswertung 1034 hinsichtlich der Raddrehzahlen werden die Signale 301 beziehungsweise 302 einem Schwellwertvergleich 1032 zugeführt. Durch diesen Schwellwertvergleich 1032 wird erkannt, ob der durch den Schalter 1029 bedingte Offset ($R*i_3$) auf den High-Pegel vorliegt oder nicht. Die Schwelle in der Einheit 1032 liegt dabei zwischen dem Pegel $[R*(i_1+i_2)]$ und $[R*(i_1+i_2+i_3)]$.

Ausgangsseitig des Schwellwertvergleichs 1032 liegt also ein Signal $M_{on/off}$ an, das darüber Aufschluß gibt, ob entweder ein anzeigerelevanter Bremsbelagverschleiß und/oder ein anzeigerelevanter Luftspalt vorliegt (Signalwert $M_{on}$) oder nicht (Signalwert $M_{off}$). Das Signal M mit den Signalwerten $M_{on}$ oder $M_{off}$ wird dem Block 1033 zugeführt, dessen Funktion anhand der Figur 8 näher beschrieben werden soll. Weiterhin wird dem Block 1033 das Ausgangssignal BLS eines Bremslichtschalters 1037 und ein die Fahrzeuglängsgeschwindigkeit repräsentierendes Signal V (Block 1036) zugeführt.

Der Block 1037 repräsentiert dabei einen Schalter, der in bekannter Weise eine Betätigung der Bremse in der Weise sensiert, daß der Schalter mit dem vom Fahrer betätigbaren Bremspedal verbunden ist. Ein solcher Schalter (Bremslichtschalter) ist im allgemeinen zur Betätigung des Bremslichtes am Fahrzeug vorhanden. Das Signal BLS kann im Block 1037 selbstverständlich auch alternativ oder ergänzend zum Bremslichtschalter in Abhängigkeit von dem momentanen Bremsdruck erzeugt werden. Ein Signal, das den momentanen Bremsdruck repräsentiert, liegt bei vielen Bremssystemen (Antiblockiersysteme, Antriebsschlupfregelsysteme oder Fahrdynamiksysteme) im entsprechenden Steuergerät in bekannter Weise gebildet vor.

Ein die Fahrzeuglängsgeschwindigkeit repräsentierendes Signal V kann in bekannter Weise aus den Radbewegungen einer oder mehrerer Räder gebildet werden und liegt im allgemeinen ebenfalls als sogenannte Referenzgeschwindigkeit bei vielen Bremssystemen (Antiblockiersysteme, Antriebsschlupfregelsysteme oder Fahrdynamiksysteme) vor (gestrichelte Linie zur Brems-, Antriebs- oder sonstigen Regelung/Steuerung 1035).

In der Figur 8 wird nach dem Startschritt 801 im Schritt 802 der aktuell am Block 1033 anliegende Signalwert $M_{on/off}$ sowie der aktuelle Wert des Signals $BLS_{on/off}$ und V eingelesen. Im Schritt 803 wird abgefragt, ob das Signal M den Wert $M_{on}$ aufweist, wobei der Wert $M_{on}$ vom Block 1032 dann ausgegeben wird, wenn der High-Pegel des Drehzahlsignals erhöht ist.

Liegt keine Erhöhung des High-Pegels des Drehzahlsignals vor, so wird der Wert $M_{off}$ ausgegeben, was bedeutet, daß der Schalter 1029 (Fig.3a) geöffnet ist und damit weder ein anzeigerelevanter Luftspalt (Signal LS, Fig.3a) noch ein anzeigerelevanter Bremsbelagverschleiß (Signal BBV, Fig.3a) vorliegt. In diesem Fall wird sofort zum Endschritt 807 übergegangen.

Liegt eine Erhöhung des High-Pegels des Drehzahlsignals vor, so wird nach dem Schritt 803 zum Schritt 804 übergegangen, in dem festgestellt wird, ob der Signalwert $M_{on}$ mit dem Bremsbetätigungssignal $BLS_{on}$ zeitlich korreliert ist. Dies kann bedeuten, daß festgestellt wird, ob der Signalwert $M_{on}$ nur dann auftritt, wenn gleichzeitig eine Bremsbetätigung durch das Signal $BLS_{on}$ angezeigt wird. Eine solche Korrelation kann durch das einmalige gemeinsame Auftreten des Wertes Mon und $BLS_{on}$ gegeben sein, es kann aber auch erst durch eine vorgebbare Wiederholungshäufigkeit einer solchen Korrelation festgestellt werden.

Wird im Schritt 804 eine Korrelation zwischen dem Autreten des Signalwertes $M_{on}$ und $BLS_{on}$ festgestellt, so bedeutet dies, daß eine Veränderung des Drehzahlsignals durch Zuschalten der Stromquelle $i_3$ immer dann stattfindet, wenn eine Bremsbetätigung vorliegt. Wie eingangs beschrieben, wird ein übermäßiger Bremsbelagverschleiß nur durch eine Berührung des in den Bremsbelag eingelagerten Kontaktstiftes mit der Bremsscheibe detektiert, also nur bei einer Bremsbetätigung. Ein gegebenenfalls zu großer Luftspalt zwischen dem Sensorelement 5030 (Fig.3a) und dem Zahnkranz 101 (Fig.3a) ist dagegen unabhängig von einer Bremsbetätigung. Eine zeitliche Korrelation zwischen dem Auftreten des Signalwertes $M_{on}$ und $BLS_{on}$ bedeutet also, daß ein übermäßiger Bremsbelagverschleiß vorliegt. Im Schritt 805 wird dieser Bremsbelagverschleiß durch Abgabe eines Signals 18a in der Anzeige 110a zur Anzeige gebracht.

Wird im Schritt 804 keine Korrelation zwischen dem Auftreten des Signalwertes $M_{on}$ und $BLS_{on}$ festgestellt, so bedeutet dies, daß eine Veränderung des Drehzahlsignals durch Zuschalten der Stromquelle $i_3$ unabhängig von einer Bremsbetätigung vorliegt. Dies deutet auf einen zu großen Luftspalt (mangelhafte Güte des Drehzahlsignals) zwischen dem Sensorelement 5030 (Fig.3a) und dem Zahnkranz 101 (Fig.3a) hin. Wird nun (optional) noch im Schritt 808 abgefragt, ob die Fahrzeuglängsgeschwindigkeit einen vorgebbaren Schwellwert SW überschreitet, so bedeutet dies im Falle einer Schwellwertüberschreitung, daß ein übermäßiger Luftspalt vorliegt. Im Schritt 805 wird diese mangelhafte Signalgüte durch Abgabe eines Signals 18b in der Anzeige 110b zur Anzeige gebracht. Steht das Fahrzeug oder bewegt sich das Fahrzeug nur langsam, so wird direkt der Endschritt 807 angesteuert.

Während im dem in der Figur 3c gezeigten Ausführungsbeispiel jeweils getrennte Anzeigen 110a und 110b zur Anzeige eines übermäßigen Bremsbelagverschleißes beziehungsweise für mangelhafte Güte des Drehzahlsignals gezeigt sind, kann auch nur eine einzige Anzeige vorgesehen sein, da beide Fehler in ihrer Schwere im Fahrbetrieb gleichwertig einzustufen sind und einen sofortigen Werkstatt-Service erfordern. Mittels einer geeigneten Serviceanleitung kann die Ursache für das Ansprechen einer solchen Anzeige eindeutig diagnostiziert werden.

In dem anhand der Figur 3a gezeigten Ausführungsbeispiel wurde bei Vorliegen eines übermäßigen Bremsbelagverschleißes und/oder eines übermäßig großen Luftspalts jeder High-Pegel der Drehzahlsignals erhöht. In der folgenden Variante wird demgegenüber nur jeder n-te, im konkreten Beispiel jeder vierte High-Pegel, erhöht. Dies minimiert die durch den Offset bedingte Verlustleistung. Darüber hinaus hat diese Erfindungsvariante bei der Übertragung des Bremsbelagverschleißes den Vorteil, daß ein eventuelles Prellen des Bremsbelagverschleißschalters keine unkorrekte Anzeige zur Folge hat, da der offset erst nach Ablauf von n High-Pegeln initiiert wird.

Die Figur 3b zeigt diese zweite Ausführungsvariante der Erfindung. Hierbei ist mit dem Bezugszeichen 502 eine Einheit bezeichnet, die, ähnlich wie die obenbeschriebene Einheit 102' (Fig.3a), die eigentliche Drehzahlerfassung und Teile der Erfassung des Bremsbelagverschleißes zusammenfaßt. Die Einheit 502 ist über die Verbindungen 5051 und 5052 mit den Eingängen 1031a und 1031b eines in der Figur 3b nicht dargestellten Steuergerätes verbunden. Dieses Steuergerät entspricht im wesentlichen der anhand der Figur 3c beschriebenen Einheit 103'.

Weiterhin ist die Einheit 502 über die Verbindung 5053 und 5054 mit dem Bremsbelagschalter S1 (entspricht dem Schalter 1041 der Figuren 2 und 3a) verbunden. Der Schalter S1 ist in diesem Ausführungsbeispiel im Normalfall (keine anzeigerelevanter Bremsbelagverschleiß) geschlossen. Darüber hinaus ist in der Figur 3b der schon anhand der Figuren 6 und 7 schon beschriebene Block 5102, der das Signal LS (Luftspalt/Signalgüte) erzeugt, zu finden.

Die eigentliche Drehzahlerfassung geschieht analog zu der anhand der Figur 2 bzw. 3a beschriebenen Weise.

Erreicht der Bremsbelag einen gewissen Abnutzungsgrad, so wird der Schalter S1 geöffnet. Durch die geöffnete Stellung des Schalters S1 soll der obere in der Figur 3b gezeigte Eingang des logischen ODER-Gatters 5055 mit einem Low-Pegel belegt werden, bei geschlossenen Schalter S1 weist dann der entsprechende Eingang des logischen ODER-Gatters 5055 einen High-Pegel auf. Wird im Block 5102 ein übermäßig großer Luftspalt festgestellt, so wird das ODER-Gatter 5055 an dem entsprechenden Eingang mit einem Low-Pegel belegt. Ausgangsseitig des ODER-Gatters 5055 liegt also immer dann ein High-Pegel an, wenn weder ein anzeigerelevanter Bremsbelagverschleiß noch ein übermäßig großer Luftspalt detektiert wird. Ansonsten liegt ausgangseitig des ODER-Gatters 5055 ein Low-Signal an.

Das Ansteuersignal des Transistors 5032 wird invertiert auf den unteren Eingang des logischen UND-Gatters 5021 geführt. Das heißt, daß eine Ansteuerung des Transistors 5032 (Zuschaltung des Stromquelle $i_2$, High-Pegel des Drehzahlsignals) als Low-Pegel (invertiert) am logischen UND-Gatters 5021 anliegt. Eine durch den Transistor abgeschaltete Stromquelle $i_2$ (Low-Pegel am Transistor 5032) bedeutet, durch die Invertierung bedingt, ein Anliegen eines High-Pegels am unteren Eingang des UND-Gatters 5021. Ausgangsseitig liegt am UND-Gatter 5021 dann ein High-Pegel an, wenn weder ein anzeigerelevanter Bremsbelagverschleiß (Schalter S1 geschlossen, oberer Eingang des ODER-Gatters 5055 liegt auf High-Pegel) noch ein anzeigerelevanter Luftspalt (unterer Eingang des ODER-Gatters liegt auf High-Pegel) vorliegt und gleichzeitig die Stromquelle $i_2$ abgeschaltet ist. Ansonsten befindet sich der Ausgang des UND-Gatters auf dem Low-Pegel.

Der Ausgang des UND-Gatters 5021 liegt an dem Eingang des logischen ODER-Gatters 5022. Darüber hinaus sind mit den anderen beiden Eingängen des ODER-Gatters 5022 die Komparatoren K1 und K2 verbunden.

Der Komparator K1 vergleicht die Eingangsspannung VCC der Sensoreinheit 502 mit einem vorgebbaren Schwellwert REF.K1. Dies geschieht zur Erfassung von Unterspannungen, die den ordnungsgemäßen Betrieb der Einheit 502 beeinträchtigen können. Tritt eine solche Unterspannung auf, ist also VCC kleiner als REF.K1, so wird an den oberen Eingang des ODER-Gatters 5022 ein High-Pegel gelegt. Ansonsten liegt dieser Eingang auf dem Low-Pegel.

Der Komparator K1 vergleicht die durch den Temperaturfühler 5025 erfaßte Temperatur mit einem vorgebbaren Schwellwert REF.K2. Der Temperaturfühler 5025 mißt dabei die Temperatur, der die Sensoreinheit 502 unterworfen ist. Dabei ist der Temperaturfühler 5025 in bekannter Weise direkt in den integrierten Schaltkreis (IC) der Sensoreinheit 502 integriert, beispielsweise als Diode, deren temperaturabhängige Flußspannung gemessen wird. Die Temperaturmessung hat den Hintergrund, daß die Sensoreinheit 502 im allgemeinen radnah, also auch in der Nähe der Bremsscheiben angebracht ist. Die von Bremsscheiben ausgehende Hitze kann die Sensoreinheit 502 derart hoch erhitzen, daß der ordnungsgemäße Betrieb der Einheit 502 beeinträchtigen wird. Tritt eine solche Überhitzung ein, ist also die gemessene Temperatur größer als REF.K2, so wird an den unteren Eingang des ODER-Gatters 5022 ein High-Pegel gelegt. Ansonsten liegt dieser Eingang auf dem Low-Pegel.

Ausgangsseitig des ODER-Gatters 5022 liegt also dann ein High-Signal, wenn wenigstens einer der drei Eingänge auf dem High-Pegel aufweist, wenn also

- entweder eine Überhitzung des Sensoreinheit 502 oder
- eine Unterspannung oder
- kein anzeigerelevanter Bremsbelagverschleiß und kein anzeigerelevanter Luftspalt vorliegt und gleichzeitig die Stromquelle $i_2$ abgeschaltet ist.

Ansonsten liegt der Ausgang des ODER-Gatters auf dem Low-Pegel.

Der Ausgang des ODER-Gatters 5022 ist mit dem Reset-Eingang R des Counters 5023 verbunden. Auf ein High-Signal am R-Eingang hin wird der Counter 5023 zurückgesetzt. Der Clock-Eingang C des Counters 5023 ist mit dem Ansteuersignal für den Transistor 5032 verbunden. Der Eingang C erhält damit ein High-Pegel, wenn die Stromquelle $i_2$ eingeschaltet wird, und einen Low-Pegel, wenn die Stromquelle $i_2$ ausgeschaltet wird. Der in bekannter Weise als Flip-Flop-Schalter ausgelegte Counter 5023 wird also immer dann geschaltet, wenn die Stromquelle $i_2$ ein- bzw. ausgeschaltet wird. Der Counter 5023 hat drei Ausgänge, die dann einen High-Pegel aufweisen, wenn sich der am Clock-Eingang C anliegende Pegel das erste, zweite und vierte Mal von Low nach High geändert hat. Damit wird erreicht, daß an dem UND-Gatter 5024, dem die Ausgänge des Counters 5023 zugeführt werden, dann drei High-Pegel anliegen, wenn die Stromquelle $i_2$ das vierte Mal eingeschaltet wird. In diesem Fall (alle drei Eingänge des UND-Gatters 5024 liegen auf High) liefert das UND-Gatter ausgangsseitig auch ein High-Pegel, wor-

aufhin die dritte Stromquelle $i_3$ eingeschaltet wird. Der Strom $i_3$ der Stromquelle $i_3$ wird dann dem zu diesem Zeitpunkt anliegenden Strom $(i_1+i_2)$ überlagert, was zu einem Gesamtstrom $(i_1+i_2+i_3)$ am Ausgang 5052 führt. Das Einschalten der Stromquelle $i_3$ kann dabei durch einen in Reihe zu dieser Stromquelle $i_3$ geschalteten, in der Figur 3b nicht dargestellten Transistor geschehen. Dies würde dann ähnlich wie das Zu- und Abschalten der Stromquelle $i_3$ durch den in der Figur 3a gezeigten Transistor 1029 geschehen.

Die Figur 5a zeigt das am Ausgang 5052 anliegende Signal, wenn der Schalter S1 geschlossen ist (kein anzeigerelevanter Bremsbelagverschleiß) und kein anzeigerelevanter Luftspalt vorliegt. Der im unteren Signalzug der Figur 5a gezeigte obere Eingang des UND-Gatters 5052 ist dann auf High eingestellt. Durch das ODER-Gatter 5022 wird dann der Counter 5023 (Eingang R) immer dann zurückgesetzt, wenn die Stromquelle $i_2$ ausgeschaltet wird. Auf diese Weise ist gewährleistet, daß die dritte Stromquelle $i_3$ ausgeschaltet bleibt, wenn kein anzeigerelevanter Bremsbelagverschleiß oder kein anzeigerelevanter Luftspalt vorliegt. Im Steuergerät 103' (Eingang 1031b) wird dann das am Ausgang 5052 anliegende Signal über den Widerstand R in eine Spannung umgewandelt, woraufhin mittels der schon beschriebenen Frequenzanalyse 1034 die Raddrehzahl N ermittelt wird.

Die Figur 5b zeigt den Verlauf des am Ausgang 5052 anliegenden Signals, wenn der Schalter S1 geöffnet ist (anzeigerelevanter Bremsbelagverschleiß) und/ oder ein anzeigerelevanter Luftspalt vorliegt. Der im unteren Signalzug der Figur 5b gezeigte obere Eingang des UND-Gatters 5052 ist dann auf Low eingestellt. Durch das ODER-Gatter 5022 wird dann der Counter 5023 (Eingang R) nur dann zurückgesetzt, wenn eine Unterspannung (Komparator K1) oder eine Übertemperatur (Komparator K2) vorliegt. Im Normalfall (weder Unterspannung noch Übertemperatur) liegt dann der R-Eingang des Counters 5023 auf Low, woraufhin bei jedem vierten Einschalten der Stromquelle $i_2$ die Stromquelle $i_3$ eingeschaltet wird. Dies führt zu dem in oberen Teil der Figur 5b zu sehenden Verlauf des Drehzahlsignals.

Wie anhand der Figur 3c schon beschrieben wird im Steuergerät 103' (Eingang 1031b) das am Ausgang 5052 anliegende Signal über den Widerstand R in eine Spannung umgewandelt, woraufhin mittels der schon beschriebenen Frequenzanalyse 1034 die Raddrehzahl N ermittelt wird. Zusätzlich wird durch den Schwellwertvergleich 1032 erkannt, ob der Pegel R∗ $(i_1+i_2)$ überschritten wird. Dies ist im Fall eines anzeigerelevanten Bremsbelagverschleißes oder eines anzeigerelevanten Luftspalts durch die Erhöhung des vierten High-Pegels des Drehzahlsignals gegeben und wird dann durch Bildung des Signals $M_{on}$ wie schon beschrieben in der Einheit 1022 ausgewertet.

## Patentansprüche

1. System zur Veränderung eines eine Drehbewegung eines Fahrzeugrades repräsentierenden Signals mit

   - ersten Mitteln [$i_1$, $i_2$, 101, 5030, 5031] zur Erzeugung eines die Drehbewegung repräsentierenden ersten Signals und
   - zweiten Mitteln [1041, 5102, S1] zur Erzeugung wenigstens zweier weiterer Signale [BBV, LS], wobei jeweils eines der weiteren Signale als Zusatzinformation verschiedene Betriebszustände wenigstens zweier unterschiedlicher Vorrichtungen wie die ersten Mittel oder den Bremsbelag einer an dem Fahrzeugrad vorhandenen Radbremse repräsentiert, und
   - dritten Mitteln [$i_3$, 1028, 1029, 5024], mittels der das erste Signal abhängig von den weiteren Signalen [BBV, LS] in vorgebbarer Weise verändert werden kann,

   **dadurch gekennzeichnet, dass**

   - die dritten Mittel [$i_3$, 1028, 1029] derart ausgestaltet sind, dass das die Drehbewegung repräsentierende Signal nur durch eine Veränderung in einer einzigen Weise wenigstens zwei unterschiedliche Zusatzinforniationen überträgt und diese Veränderung in Abhängigkeit von einem der weiteren Signale [BBV, LS] stattfindet.

2. System zur Auswertung eines eine Drehbewegung eines Fahrzeugrades repräsentierenden Signals, wobei das Fahrzeugrad eine Radbremse aufweist und wobei das Signal zur Übertragung von Zusatzinformationen wie beispielsweise der Verschleiß des Bremsbelages der Radbremse oder die Güte des Signals in einer vorgebbaren Weise verändert werden kann,
   **dadurch gekennzeichnet, daß**

   - fünfte Mittel [1036, 1037] zur Erzeugung wenigstens eines eine Betätigung der Radbremse repräsentierenden Signals [BLS, V] und
   - vierte Mittel [103', 1032, 1033] vorgesehen sind, mittels der das Signal oder das veränderte Signal mit wenigstens dem erzeugten, eine Bremsbetätigung repräsentierenden Signal [BLS, V] verknüpft wird und abhängig von dieser Verknüpfung wenigstens zwei die Zusatzinformationen repräsentierenden Signale [18a, 18b] gebildet werden.

3. System zur Veränderung und Auswertung eines eine Drehbewegung repräsentierenden Signals mit

   - ersten Mitteln [$i_1$, $i_2$, 101, 5030, 5031] zur Erzeugung eines die Drehbewegung repräsentierenden ersten Signals und

- zweiten Mitteln [1041, 5102] zur Erzeugung wenigstens zweier weiterer Signale [BBV, LS], wobei jeweils eines der weiteren Signale als Zusatzinformationen verschiedene Betriebszustände wenigstens zweier unterschiedlicher Vorrichtungen wie die ersten Mittel oder Bremsbelag repräsentiert, und

- dritten Mitteln [$i_3$, 1028, 1029], mittels der das erste Signal abhängig von den weiteren Signalen [BBV, LS] in vorgebbarer Weise verändert werden kann,

- vierte Mittel (103'), mittels der das erste oder das veränderte erste Signal ausgewertet wird und abhängig von dieser Auswertung wenigstens ein die verschiedenen Betriebszustände der wenigstens zwei unterschiedlichen Vorrichtungen repräsentierendes Signal [18a, 18b] erzeugt wird,

**dadurch gekennzeichnet, dass**

- fünfte Mittel [1036, 1037] zur Erzeugung wenigstens eines eine Bremsbetätigung repräsentierenden Signals [BLS, V] vorgesehen sind und

- die dritten Mittel [$i_3$, 1028, 1029] derart ausgestaltet sind, dass das die Drehbewegung repräsentierende Signal nur durch eine Veränderung in einer einzigen Weise wenigstens zwei unterschiedliche Zusatzinformationen überträgt und diese Veränderung in Abhängigkeit von einem der weiteren Signale [BBV, LS] stattfindet und

- die vierten Mittel [103', 1032, 1033] derart ausgestaltet sind, dass das erste oder das veränderte erste Signal mit wenigstens dem erzeugten, eine Bremsbetätigung repräsentierenden Signal [BLS, V] verknüpft wird und abhängig von dieser Verknüpfung wenigstens zwei die Zusatzinformationen repräsentierende Signale [18a, 18b] gebildet werden.

4. System nach Anspruch 1 oder 3, **dadurch gekennzeichnet, daß**

- die ersten Mittel [$i_1$, $i_2$, 101, 5030, 5031] derart ausgestaltet sind, daß das erste Signal wenigstens zwei erste Stromwerte [$i_1$, ($i_1$+$i_2$)] und/oder wenigstens zwei erste Spannungswerte annimmt, und

- die dritten Mittel derart ausgestaltet sind, daß zur Veränderung des ersten Signals in einer einzigen vorgebbaren Weise wenigstens einer der ersten Stromwerte [$i_1$, ($i_1$+$i_2$)] und/oder wenigstens einer der ersten Spannungswerte wenigstens eine bestimmte Zeit abhängig von dem zweiten Signal [BBV, LS] zu einem zweiten Stromwert [($i_1$+$i_3$), ($i_2$+$i_3$)] und/oder einem zweiten Spannungswert verändert werden kann.

5. System nach Anspruch 2 oder 3, **dadurch gekennzeichnet, daß** die fünften Mittel [1036, 1037] weiterhin zur Erzeugung wenigstens eines die Fahrzeuggeschwindigkeit repräsentierenden Signals [V] ausgebildet sind.

6. System nach Anspruch 2 oder 3, **dadurch gekennzeichnet, daß** die Verknüpfung in den vierten Mitteln [103', 1032, 1033] derart ausgestaltet ist, daß aus der zeitlichen Korrelation des die Betätigung der Radbremse repräsentierenden Signals [BLS, V] mit der vorgebbaren Änderung des die Drehbewegung eines Fahrzeugrades repräsentierenden Signals die die Zusatzinformationen repräsentierenden Signale [18a, 18b] gebildet werden.

7. System nach Anspruch 1 oder 3, **dadurch gekennzeichnet, daß** die ersten Mittel insbesondere als ein aktiver Drehzahlfühler ausgebildet sind.

8. System nach Anspruch 1 oder 3, **dadurch gekennzeichnet, daß** die zweiten Mittel [1041, 5102] zur Erzeugung eines den Bremsbelagverschleiß an wenigstens einer Fahrzeugradbremse repräsentierenden Signals [BBV] und/oder zur Erzeugung eines die Amplitude eines mit dem ersten Signal zusammenhängenden Signals [$U_B$] repräsentierenden Signals [LS] ausgelegt sind.

9. System nach Anspruch 1 oder 3, **dadurch gekennzeichnet, daß** die ersten, zweiten und dritten Mittel radnah und/oder die vierten, fünften Mittel radfern angeordnet sind.

**Claims**

1. System for changing a signal which represents a rotational movement of a vehicle wheel, having

- first means [$i_1$, $i_2$, 101, 5030, 5031] for generating a first signal which represents the rotational movement, and

- second means [1041, 5102, S1] for generating at least two further signals [BBV, LS], in each case one of the further signals representing, as supplementary information, various operating states of at least two different devices such as the first means or the brake lining of a wheel brake which is present on the vehicle wheel, and

- third means [$i_3$, 1028, 1029, 5024] by means of which the first signal can be changed in a predefinable way as a function of the further signals [BBV, LS],

**characterized in that**

- the third means [$i_3$, 1028, 1029] are configured in such a way that the signal which represents the rotational movement transmits at least two different supplementary information items only by changing in a single way, and this change takes place as a function of one of the further signals [BBV, LS].

2. System for evaluating a signal which represents a rotational movement of a vehicle wheel, the vehicle wheel having a wheel brake, and the signal for transmitting supplementary information such as, for example, the wear of the brake lining of the wheel brake or the quality of the signal being capable of being changed in a predefinable way,
**characterized in that**

- fifth means [1036, 1037] for generating at least one signal [BLS, V], representing an actuation of the wheel brake, and
- fourth means [103', 1032, 1033] are provided by means of which the signal or the changed signal is logically linked to at least the generated signal [BLS, V] which represents an actuation of the brake and at least two signals [18a, 18b] which represent the supplementary information are formed as a function of this logic linking.

3. System for changing and evaluating a signal which represents a rotational movement, having

- first means [$i_1$, $i_2$, 101, 5030, 5031] for generating a first signal which represents the rotational movement, and
- second means [1041, 5102] for generating at least two further signals [BBV, LS], in each case one of the further signals representing, as supplementary information, various operating states of at least two different devices such as the first means or brake lining, and
- third means [$i_3$, 1028, 1029] by means of which the first signal can be changed in a predefinable way as a function of the further signals [BBV, LS],
- fourth means (103') by means of which the first signal or the changed first signal is evaluated and at least one signal [18a, 18b] which represents the various operating states of the at least two different devices is generated as a function of this evaluation,

**characterized in that**

- fifth means [1036, 1037] for generating at least one signal [BLS, V] which represents a brake actuation are provided, and
- the third means [$i_3$, 1028, 1029] are configured in such a way that the signal which represents the rotational movement transmits at least two different supplementary information items only by changing in a single way, and this change takes place as a function of one of the further signals [BBV, LS], and
- the fourth means [103', 1032, 1033] are configured in such a way that the first signal or the changed first signal is logically linked to at least the generated signal [BLS, V] which represents an actuation of the brake, and at least two signals [18a, 18b] which represent the supplementary information are formed as a function of this logic linking.

4. System according to Claim 1 or 3, **characterized in that**

- the first means [$i_1$, $i_2$, 101, 5030, 5031] are configured in such a way that the first signal assumes at least two first current values [$i_1$, ($i_1$+$i_2$)] and/or at least two first voltage values, and
- the third means are configured in such a way that, in order to change the first signal in a single predefinable way, at least one of the first current values [$i_1$, ($i_1$+$i_2$)] and/or at least one of the first voltage values can be changed for at least a specific time as a function of the second signal [BBV, LS] to form a second current value [($i_1$+$i_3$), ($i_2$+$i_3$)] and/or a second voltage value.

5. System according to Claim 2 or 3, **characterized in that** the fifth means [1036, 1037] continue to be embodied so as to generate at least one signal [V] which represents the speed of the vehicle.

6. System according to Claim 2 or 3, **characterized in that** the logic linking in the fourth means [103', 1032, 1033] is configured in such a way that the signals [18a, 18b] which represent the supplementary information are formed from the chronological correlation of the signal [BLS, V] which represents the actuation of the wheel brake with the predefinable change in the signal which represents the rotational movement of a vehicle wheel.

7. System according to Claim 1 or 3, **characterized in that** the first means are embodied in particular as an active rotational speed sensor.

8. System according to Claim 1 or 3, **characterized in that** the second means [1041, 5102] are configured so as to generate a signal [BBV] which represents the brake lining wear on at least one vehicle brake and/or so as to generate a signal [LS] which represents the amplitude of a signal [U$_B$] which is associated with the first signal.

9. System according to Claim 1 or 3, **characterized in that** the first, second and third means are arranged near to a wheel and/or the fourth and fifth means are arranged remote from a wheel.

**Revendications**

1. Système pour modifier un signal représentant un mouvement de rotation d'une roue de véhicule comprenant

   - des premiers moyens (i$_1$, i$_2$, 101, 5030, 5031) pour générer un premier signal représentant le mouvement de rotation et
   - des seconds moyens (1041, 5102, S1) pour générer au moins deux autres signaux (BBV, LS), chaque fois l'un des autres signaux représentant comme information supplémentaire, différents états de fonctionnement d'au moins deux dispositifs différents tels que les premiers moyens ou la garniture d'un frein de roue et
   - des troisièmes moyens (i$_3$, 1028, 1029, 5024) à l'aide desquels le premier signal est modifié de manière prédéterminée en fonction des autres signaux (BBV, LS),

   **caractérisé en ce que**

   - les troisièmes moyens (i$_3$, 1028, 1029) sont réalisés pour que le signal représentant le mouvement de rotation ne soit transmis que par une modification d'une unique manière d'au moins deux informations supplémentaires différentes et cette modification se fait en fonction de l'un des autres signaux (BBV, LS).

2. Système d'exploitation d'un signal représentant un mouvement de rotation d'une roue de véhicule, la roue étant équipée d'un frein de roue et le signal pouvant être modifié d'une manière prédéterminée pour transmettre des informations supplémentaires comme par exemple l'usure de la garniture du frein de roue ou la qualité du signal, **caractérisé par**

   - des cinquièmes moyens (1036, 1037) pour générer au moins un signal (BLS, V) représentant l'actionnement du frein de roue et
   - des quatrièmes moyens (103', 1032, 1033) à l'aide desquels le signal ou le signal modifié est combiné avec au moins le signal (BLS, V) présentant un actionnement de frein, et en fonction de cette combinaison on forme au moins deux signaux (18a, 18b) représentant les informations supplémentaires.

3. Système pour modifier et exploiter un signal représentant un mouvement de rotation comprenant

   - des premiers moyens (i$_1$, i$_2$, 101, 5030, 5031) pour générer un premier signal représentant le mouvement de rotation et
   - des seconds moyens (1041, 5102) pour générer au moins deux autres signaux (BBV, LS), chaque fois l'un des autres signaux représentant comme informations supplémentaires, différents états de fonctionnement d'au moins deux dispositifs différents comme les premiers moyens ou la garniture de frein et
   - des troisièmes moyens (i$_3$, 1028, 1029) à l'aide desquels on peut modifier de manière prédéterminée le premier signal en fonction des autres signaux (BBV, LS),
   - des quatrièmes moyens (103') à l'aide desquels on exploite le premier signal ou le premier signal modifié et en fonction de cette exploitation on génère au moins un signal ( 18a, 18b) représentant les différents états de fonctionnement au moins des deux dispositifs différents,

   **caractérisé par**

   - des cinquièmes moyens (1036, 1037) pour générer au moins un signal (BLS, V) représentant un actionnement de frein et
   - des troisièmes moyens (i$_3$, 1028, 1029) réalisés pour que le signal représentant un mouvement de rotation transmette au moins deux informations supplémentaires différentes par seulement une modification d'une unique manière et cette modification se fait en fonction de l'un des autres signaux (BBV, LS) et
   - les quatrièmes moyens (103', 1032, 1033) sont réalisés pour que le premier signal ou le premier signal modifié soit combiné avec au moins le signal (BLS, V) représentant un actionnement de frein et en fonction de cette combinaison on forme au moins deux signaux (18a, 18b) représentant les informations supplémentaires.

4. Système selon la revendication 1 ou 3, **caractérisé en ce que**

   - les premiers moyens (i$_1$, i$_2$, 101, 5030, 5031) sont réalisés pour que le premier signal prenne au moins deux premières valeurs de courant [i$_1$, (i$_1$ + i$_2$)] et/ou au moins deux premières valeurs de tension et
   - les troisièmes moyens sont réalisés pour modifier le premier signal d'une unique manière prédéterminée pour qu'au moins l'une des pre-

mières valeurs de courant $[i_1, (i_1 + i_2)]$ et/ou au moins l'une des premières valeurs de tension puisse être modifiée au moins pendant une durée déterminée en fonction du second signal (BBV, LS) pour donner une seconde valeur de courant $[(i_1 + i_3), (i_2 + i_3)]$ et/ou une seconde valeur de tension.

5. Système selon la revendication 2 ou 3, **caractérisé en ce que** les cinquièmes moyens (1036, 1037) sont en outre réalisés pour générer au moins un signal (V) représentant la vitesse du véhicule.

6. Système selon la revendication 2 ou 3, **caractérisé en ce que** la combinaison dans les quatrièmes moyens (103', 1032, 1033) est réalisée pour qu'à partir de la corrélation dans le temps du signal (BLS, V) représentant l'actionnement du frein de roue, on puisse former les signaux (18a, 18b) représentant les informations supplémentaires par une modification prédéterminée du signal représentant le mouvement de rotation d'une roue du véhicule.

7. Système selon la revendication 1 ou 3, **caractérisé en ce que** les premiers moyens sont réalisés notamment sous la forme d'un capteur actif de vitesse de rotation.

8. Système selon la revendication 1 ou 3, **caractérisé en ce que** les seconds moyens (1041, 5102) sont conçus pour générer un signal (BBV) représentant l'usure de la garniture de frein d'au moins un frein de roue du véhicule et/ ou pour générer un signal (LS) représentant l'amplitude d'un signal $(U_B)$ associé au premier signal.

9. Système selon la revendication 1 ou 3, **caractérisé en ce que** les premiers, seconds et troisièmes moyens sont installés à proximité de la roue et/ou les quatrièmes, cinquièmes moyens sont installés à distance de la roue.

Fig. 1

Fig. 2

102   103   105   1021a

101

1021   1022   1023

1031a

1036   Status

$i_2$   $i_1$

105   1031b

1021b

R

$U_{Low} = R \cdot i_1$
$U_{High} = R \cdot (i_1 + i_2)$

1021c

1031c
1031d

$U_+$

1041   S   106   1037

High: kein BBV
Low: BBV

1021d

104

EP 0 883 536 B1

Fig. 3a

Fig. 3b

Fig. 3c

EP 0 883 536 B1

Fig. 4

Fig. 6

Fig. 5a

DF-Signal

Kein BBV-Signal (low-aktiv)

und kein LS-Signal (low-aktiv)

Fig. 5b

DF-Signal

LS-Signal (low aktiv)

oder BBV-Signal (low-aktiv)

Fig. 7

FIG. 8